(19) Europäisches Patentamt
European Patent Office
Office européen des brevets

(11) EP 3 656 801 B1

(12) # EUROPEAN PATENT SPECIFICATION

(45) Date of publication and mention of the grant of the patent:
**17.11.2021 Bulletin 2021/46**

(51) Int Cl.:
*C08G 69/16* (2006.01) *C08G 69/36* (2006.01)

(21) Application number: **19215464.9**

(22) Date of filing: **27.03.2018**

(54) **BRANCHED, TERMINATED POLYAMIDE COMPOSITIONS**

VERZWEIGTE, TERMINIERTE POLYAMIDZUSAMMENSETZUNGEN

COMPOSITIONS DE POLYAMIDE RAMIFIÉES À TERMINAISON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2017 US 201762481998 P**

(43) Date of publication of application:
**27.05.2020 Bulletin 2020/22**

(62) Document number(s) of the earlier application(s) in accordance with Art. 76 EPC:
**18718279.5 / 3 469 015**

(73) Proprietor: **AdvanSix Resins & Chemicals LLC**
**Parsippany, NJ 07054 (US)**

(72) Inventor: **NELLIAPPAN, Veera**
**Parsippany, New Jersey 07054 (US)**

(74) Representative: **Crooks, Elizabeth Caroline et al**
**Kilburn & Strode LLP**
**Lacon London**
**84 Theobalds Road**
**London WC1X 8NL (GB)**

(56) References cited:
- **YAWO-KUO TWU ET AL: "Formulation and optimization of thermoplastic polyamide elastomer properties by mixture response surface methodology", JOURNAL OF APPLIED POLYMER SCIENCE, vol. 85, no. 1, 5 July 2002 (2002-07-05), pages 9-16, XP055481106, ISSN: 0021-8995, DOI: 10.1002/app.10521**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 656 801 B1

## Description

### FIELD

The present disclosure relates to polyamide compositions and in particular, to polyamide compositions which incorporate branching and termination of the polyamide molecular chains to achieve desirable properties such as high molecular weight and high melt strength.

### BACKGROUND

Typically, polyamides are formed from precursors such as caprolactam via hydrolysis, polyaddition, and polycondensation reactions. For polyamide-6 materials formed from caprolactam, hydrolysis opens the ring of the caprolactam monomer forming two end groups - one amine end group and one carboxyl end group, polyaddition combines caprolactam monomers into intermediate molecular weight oligomers, and polycondensation combines oligomers into higher molecular weight polymers.

As shown in Reaction 1 below, the polycondensation reaction includes a reversible chemical reaction in which oligomers or prepolymers of polyamide-6 form high molecular weight polyamide chains with water as an additional product. Polycondensation occurs simultaneously with hydrolysis and polyaddition and, as the reaction proceeds to form higher molecular weight polyamide chains, a decrease in the total number of end groups present occurs.

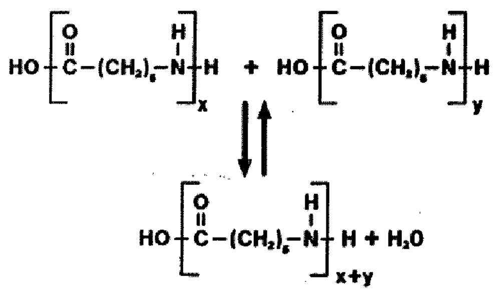

Reaction 1

Water content affects the molecular weight of the resulting polyamide chains and the total number of end groups. By removing water, the reaction proceeds toward the production of higher molecular weight polymer chains to maintain the equilibrium of the reaction. In one technique, an increasing amount of vacuum is applied to remove water from the reaction products when significantly greater molecular weight polyamides are desired. However, application of an increasingly high vacuum is not practical over extended time periods as water becomes increasingly scarce within the mixture and is thereby harder to extract over time.

Furthermore, as the molecular weight of the polyamide polymer increases during the polycondensation reaction, the viscosity of the polymer also increases. This is undesirable especially when the polymer melt is subjected to high residence times during melt processing, as the viscosity increase can lead to altered and inconsistent processing behavior, which can be detrimental in high speed spinning applications such as textiles and blown or cast film extrusion operations.

Another aspect of the polyamide reactions described above is the end group modification of the polymers. End groups can be modified to alter the design of the polyamide polymers for compatibility with certain processes. Depending on the use of mono-functional terminators or difunctional modifiers, polyamide polymers of the same molecular weight can have different end group configurations.

Terminators or modifiers are usually added to the caprolactam and react with the caprolactam and caprolactam monomers during the polymerization process. The use of monofunctional terminators (e.g., cyclohexylamine or acetic acid) results in the termination, by chemical reaction, of a carboxyl end group or an amine end group, respectively. That is, one weight equivalent of a terminator will reduce the corresponding end group by one equivalent. The termination also affects the water content of the final polyamide polymer as compared to a polymer having the same molecular weight. The terminated polymer also has a lower water content than that of an unterminated polymer coinciding with the equilibrium dynamics of the reaction. Further, the end of a terminated polymer cannot undergo further polyaddition or polycondensation reactions and thus maintains its molecular weight and exhibits a stable melt viscosity.

The use of difunctional modifiers (e.g., excess hexamethylene diamine) does not result in termination of the polymer, but rather changes the type of end group. For example, for every weight equivalent of hexamethylene diamine added, the net result is the addition of one amine end group and the reduction of one carboxyl end group. Additionally, similar to the monofunctional terminator, the use of difunctional modifiers also affects the water content of the final polyamide polymer as the modified polymer has a lower water content than that of an unterminated polymer.

Moreover, during polymerization, the water content of the reaction may also need to be reduced to very low levels to prevent depolymerization of the polyamide product, which increases production costs. For example, long cycle times for the polycondensation reaction and/or a high level of vacuum is needed to reduce the water content. Thus, it is necessary to balance the reaction cycle time to build up molecular weight and resultant melt strength.

## SUMMARY

The present disclosure provides a method of producing partially terminated polyamide compositions with branched chains from polyamide precursors. The partially terminated, branched polyamide compositions have increased melt strength properties and melt stability.

The polyamide composition may have the following formula:

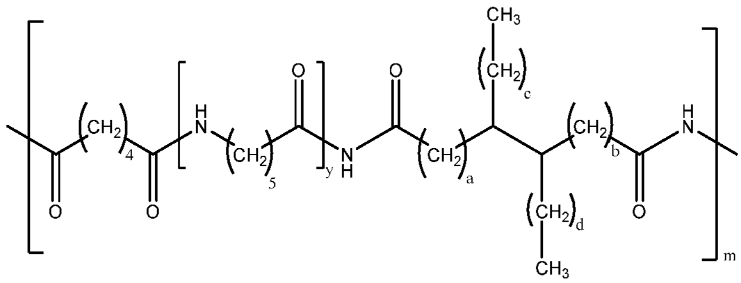

wherein: a = 6 to 10; b = 6 to 10; c = 6 to 10; d = 6 to 10; y = 80 to 400; m = 1 to 400; the carbon chains of the dimer amines both have more than 8 carbons; the polyamide composition has a dimer diamine or dimer acid composition between 1 wt.% and 40 wt.% based on the total weight of the polyamide composition; the polyamide composition is terminated with an amine endgroup and a carboxyl endgroup; and the polyamide composition has a relative viscosity between 3.0 and 7.0 RV as determined by GB/T 12006.1-2009/ISO 307:2007.

The amine endgroup concentration may be between 15 mmol/kg to 40 mmol/kg, and the carboxyl endgroup concentration may be between 15 mmol/kg to 40 mmol/kg. The polyamide composition may have a relative viscosity of 4.0 RV to 7.0 RV. The polyamide composition may have a formic acid viscosity of 230 FAV to 950 FAV as determined by ASTM D789. The polyamide composition may alternatively have a formic acid viscosity of 230 FAV to 260 FAV as determined by ASTM D789. The polyamide composition may alternatively have a formic acid viscosity of around 250 FAV as determined by ASTM D789. The polyamide composition may have a relative viscosity of 4.0 RV to 7.0 RV and a formic acid viscosity of 230 FAV to 260 FAV as determined by ASTM D789.

The polyamide composition may have the following formula:

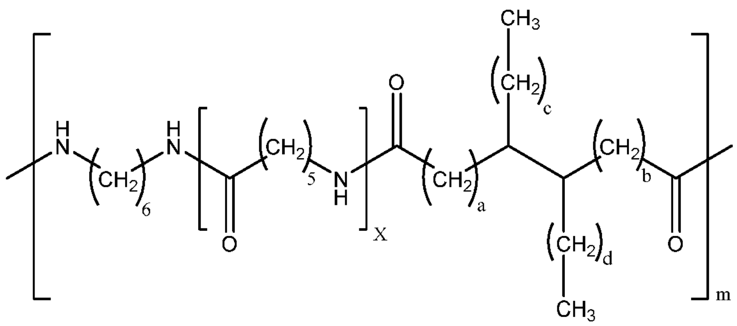

wherein: a = 6 to 10; b = 6 to 10; c = 6 to 10; d = 6 to 10; x = 80 to 400; m = 1 to 400; the carbon chains of the dimer acids both have more than 8 carbons; the polyamide composition has a dimer diamine or dimer acid composition between 1 wt.% and 40 wt.% based on the total weight of the polyamide composition; the polyamide composition is terminated with an amine endgroup and a carboxyl endgroup; and the polyamide composition has a relative viscosity between 3.0 and 7.0 RV as determined by GB/T 12006.1-2009/ISO 307:2007.

The amine endgroup concentration may be between 15 mmol/kg to 40 mmol/kg, and the carboxyl endgroup concentration may be between 15 mmol/kg to 40 mmol/kg. The polyamide composition may have a relative viscosity of 4.0 RV to 7.0 RV. The polyamide composition may have a formic acid viscosity of 230 FAV to 950 FAV as determined by ASTM D789. The polyamide composition may alternatively have a formic acid viscosity of 230 FAV to 260 FAV as determined by ASTM D789. The polyamide composition may alternatively have a formic acid viscosity of around 250

FAV as determined by ASTM D789. The polyamide composition may have a relative viscosity of 4.0 RV to 7.0 RV and a formic acid viscosity of 230 FAV to 260 FAV as determined by ASTM D789.

A method of producing a branched, terminated polyamide composition of any of the above types is also provided. The method includes the steps of reacting caprolactam and adipic acid or hexamethylene diamine in a reactor vessel to form a polyamide prepolymer; reacting the polyamide prepolymer to a dimer amine or a dimer acid to form a branched, polyamide composition; and adding terminators to the reactor vessel such that the branched, terminated polyamide composition is formed.

Stoichiometric equivalents of the dimer acid or the dimer amine and the adipic acid may be added to the reactor. The branched, terminated polyamide composition may have an amine endgroup concentration of 15 mmol/kg to 40 mmol/kg, and may have a carboxyl endgroup concentration of 15 mmol/kg to 40 mmol/kg. The branched, terminated polyamide composition may have a relative viscosity of 2.4 RV to 7.0 RV. The branched, terminated polyamide composition may alternatively have a relative viscosity of 4.0 RV to 7.0 RV. The branched, terminated polyamide composition may have a formic acid viscosity of 230 FAV to 260 FAV as determined by ASTM D789. The branched, terminated polyamide composition may alternatively have a formic acid viscosity of around 250 FAV as determined by ASTM D789. The branched, terminated polyamide composition may have a relative viscosity of 4.0 RV to 7.0 RV and a formic acid viscosity of 230 FAV to 260 FAV as determined by ASTM D789. The ratio of caprolactam to dimer acid in the branched, terminated polyamide composition may be 88:12.

A polyamide composition may, for example, include a dual-terminated polyamide with an amine end group and a carboxyl end group, which composition may have a relative viscosity of 4.0 RV to 7.0 RV and a formic acid viscosity of 230 FAV to 970 FAV as determined by ASTM D789.

The polyamide composition may be selected from the group consisting of polyamide-6, polyamide 6,6, polyamide 6/6,6, polyamide 4,6, polyamide 6,10, polyamide 12,12 and mixtures and copolymers thereof.

The amine endgroup concentration may be between 15 mmol/kg to 40 mmol/kg, and the carboxyl endgroup concentration may be between 15 mmol/kg to 40 mmol/kg.

## BRIEF DESCRIPTION OF THE DRAWINGS

The above mentioned and other features of the disclosure, and the manner of attaining them, will become more apparent and the disclosure itself will be better understood by reference to the following description of embodiments of the disclosure taken in conjunction with the accompanying drawings.

FIG. 1 illustrates a graph showing a comparison of rheological thermal stability of a dual terminated branched polyamide with a dual terminated unbranched analog, a polyamide 6 control, and a dual terminated polyamide 6 for comparison.

FIG. 2 illustrates a graph showing the frequency versus complex viscosity of the dual terminated branched polyamide with a polyamide 6 control, unterminated polyamide (2% dimer acid), and a dual-terminated polyamide 6 (MBM Grade) for comparison.

Corresponding reference characters indicate corresponding parts throughout the several views. The exemplifications set out herein illustrate exemplary embodiments of the disclosure and such exemplifications are not to be construed as limiting the scope of the disclosure in any manner.

## DETAILED DESCRIPTION

### 1. Synthesis of Branched Polyamide Compositions

The present polyamides are generally formed from caprolactam, one or more dimer acids, and one or more dimer amines.

Caprolactam is shown as Formula (I) and has the structure below:

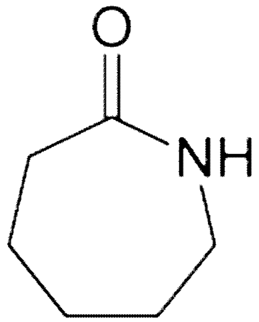

(I)

Dimer acids are shown below as Formula (II) where a, b, c, and d each range from 6 to 10. In addition, dimer acids could contain one or more unsaturated bonds. Additional information regarding dimer acids can be found in Kirk-Othmer Encyclopedia of Chemical Technology, Volume 2, pp. 1-13. Dimer acids can be converted to dimer amines by reaction with ammonia and subsequent reduction.

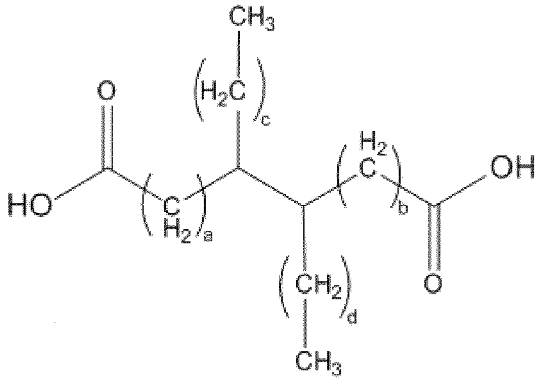

(II)

Dimer amines are shown below as Formula (III) where a, b, c, and d each range from 6 to 10. Fatty amines are nitrogen derivatives of fatty acids, olefins, or alcohols prepared from natural sources, fats and oils, or petrochemical raw materials. Fatty amines may be prepared from naturally occurring materials by hydrogenation of a fatty nitrile intermediate using a variety of catalysts. Fatty amines may also be prepared by reacting fatty alcohols with ammonia, or a low molecular weight primary or secondary amine. Additional information regarding dimer amines can be found in Kirk-Othmer Encyclopedia of Chemical Technology, Volume 2, pp. 518-537.

Suitable dimer amines are represented by the general formula shown below and include carbon chains that may have between 6 carbons and 10 carbons, i.e., alkyl groups that contain between 6-10 carbons.

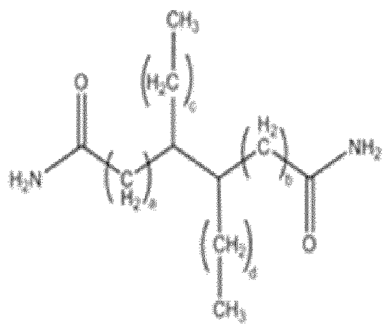

(III)

Dimer amines may have alkyl groups that include greater than 8 carbons, but the alkyl groups of the dimer amines can have as little as 3 carbons or as great as 8 carbons, 10 carbons, 15 carbons or more. The carbon chains of the dimer diamine of the final polymer may vary in length. The carbon chains may have the same number of carbon atoms. For example, the carbon chains of the final compound may each have at least 6 carbons.

To synthesize a branched polyamide composition, a dimer amine, adipic acid or hexamethylene diamine, and caprolactam may be added to a reactor vessel. Terminators, discussed further herein, are also added to the reactor along with other additives. Examples of additives include hypophosphoric acid, isophthalic acid, and deionized water.

Equation 1 below shows the synthesis of the branched polyamide composition as a one-step addition synthesis reaction while Equations 2-3 (discussed further below) show the synthesis of the branched polyamide composition of Equation 1 as a two-step process with the intermediary products shown.

As shown in Equation 1, the dimer amine and the adipic acid are in a 1:1 stoichiometric ratio while the amount of caprolactam that can be used may vary with the value of n, i.e., n may be between 80 and 400 molar ratio with respect to the dimer amine and adipic acid. The reaction shown below results in a branched polyamide composition shown that is subject to termination as discussed in greater detail herein, and the polyamide composition may have a relative viscosity between 3.0 and 7.0 RV as determined by GB/T 12006.1-2009/ISO 307:2007.

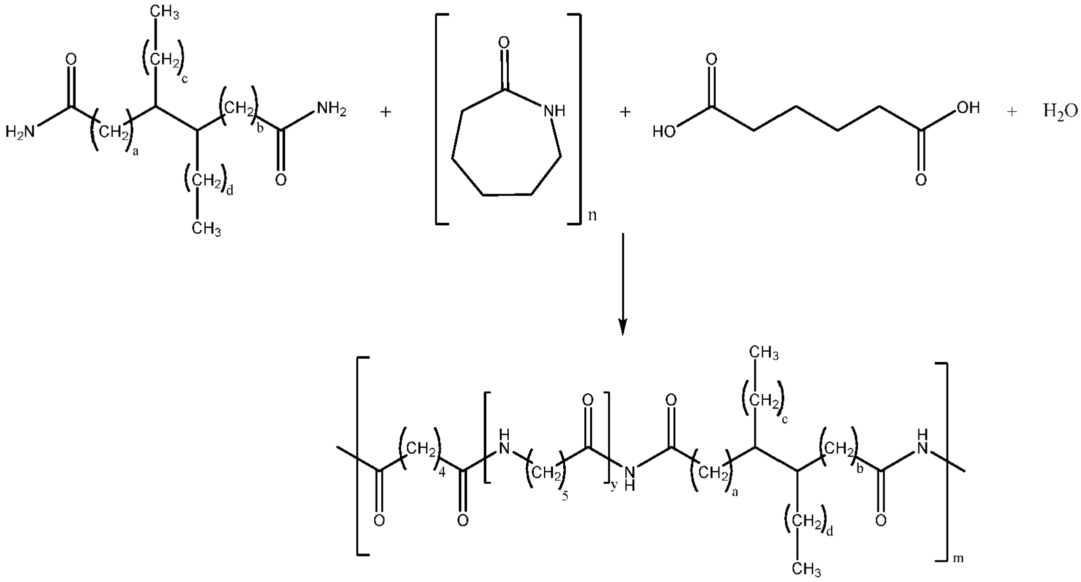

Equation 1

Various ratios of the amount of caprolactam to the amount of dimer amine may be present in the reactor vessel. For example, such ratios may be as little as 75:25, 80:20, 85:15, as great as 87:13, 90:10, or 95:5, or within any range defined between any two of the foregoing values. In an exemplary embodiment, the ratio of caprolactam to dimer acid may be 88:12.

In a two-part synthesis of a branched polyamide composition, caprolactam and adipic acid react to form a polyamide prepolymer (PA prepolymer) as shown in Equation 2 below.

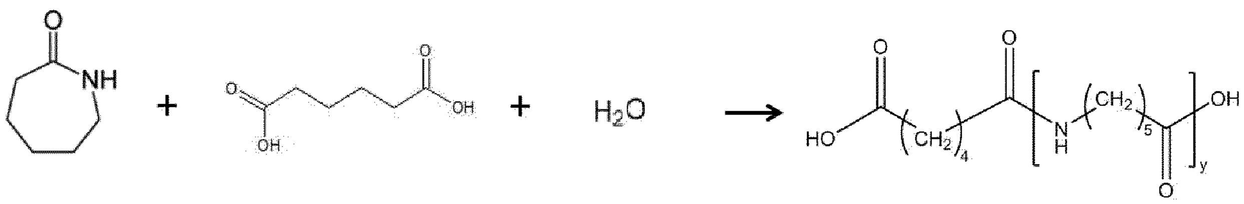

Equation 2

As the reaction proceeds, the PA prepolymer of Equation 2 reacts with the dimer amine to form the branched polyamide composition as shown below in Equation 3. As shown generally in Equation 3, the branched groups, e.g., alkyl groups, of the dimer amine are incorporated into the straight or main chain of the PA prepolymer to form the branched polyamide composition.

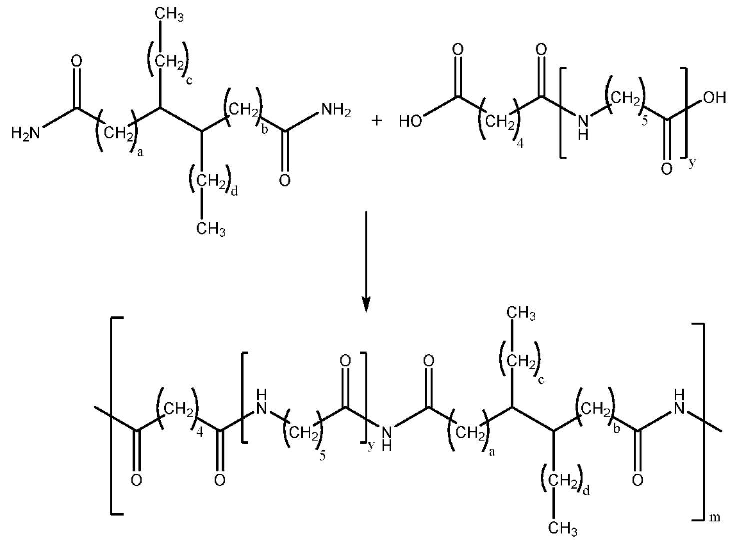

Equation 3

In Equations 1-3, a, b, c, d each range from 6 to 10, m ranges from 1 to 400, and y ranges from 80 to 400. Furthermore, the chain ends of the branched polyamide composition product shown in Equation 3 are terminated with suitable acid or amine terminators as discussed in greater detail below.

Equation 4 below shows the synthesis of the branched polyamide composition as a one-step addition synthesis reaction while Equations 5-6 (discussed further below) show the synthesis of the branched polyamide composition of Equation 4 as a two-step process with the intermediary products shown.

As shown in Equation 4, the hexamethylene diamine and the dimer acid are in a 1:1 stoichiometric ratio while the amount of caprolactam that can be used may vary with the value of n, i.e., n may be between 80 and 500 molar ratio between caprolactam, hexamethylene diamine, and dimer acid. The reaction shown below results in a branched polyamide composition shown that is subject to termination as discussed in greater detail herein.

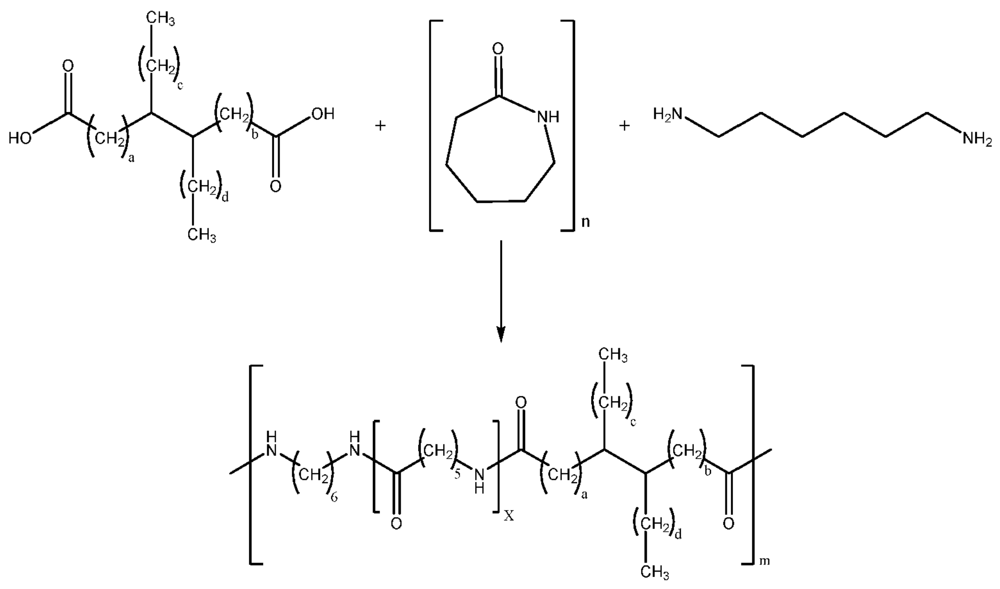

Equation 4

Various exemplary ratios of the amount of caprolactam to the amount of dimer amine are present in the reactor vessel. Exemplary ratios may be as little as 75:25, 80:20, 85:15, as great as 87:13, 90:10, or 95:5, or within any range defined between any two of the foregoing values. In an exemplary embodiment, the ratio of caprolactam to dimer acid

is 88:12.

In a two-part synthesis of a branched polyamide composition, caprolactam and diamine react form a polyamide prepolymer (PA prepolymer) as shown in Equation 5 below.

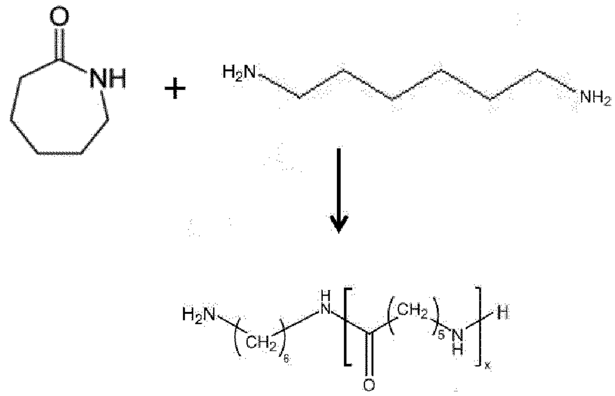

Equation 5

As the reaction proceeds, the PA prepolymer of Equation 5 reacts with the dimer acid to form the branched polyamide composition as shown below in Equation 6. As shown generally in Equation 6, the branched groups, e.g., alkyl groups, of the dimer amine are incorporated into the straight or main chain of the PA prepolymer to form the branched polyamide composition.

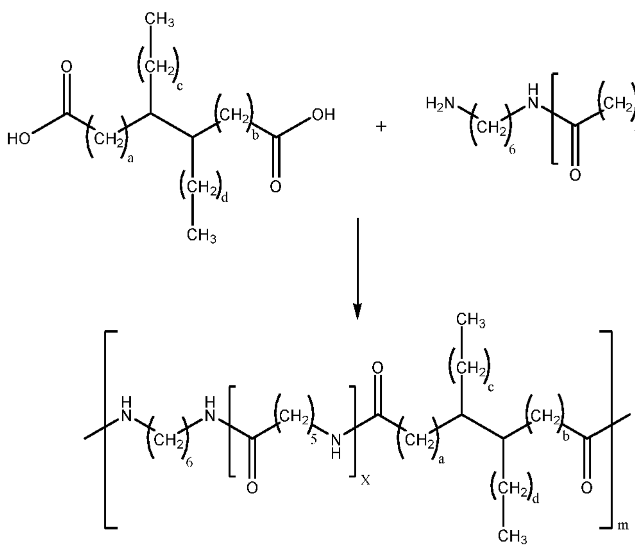

Equation 6

In the Equations 4-6, a, b, c, d each range from 6 to 10, m ranges from 1 to 400, and x ranges from 80 to 400. Furthermore, the chain ends of the branched polyamide composition product shown in Equation 6 are terminated with suitable acid or amine terminators as discussed in greater detail below.

The final polymer products of Equations 3 and 6 may have a dimer amine or dimer acid composition of as little as 1 wt.%, 2 wt.%, or 5 wt.%, or as great as 25 wt.%, 35 wt.%, or 40 wt.%, or within any range defined between any two of the foregoing values, such as between 1 wt. % and 40 wt. %, 5 wt. % and 7 wt. %, 12 wt. % and 15 wt.%, and 20 wt.% and 25 wt.%, based on the total weight of the polyamide composition.

The reactor may operate at a temperature as little as 225°C, 230°C, 235°C, as great as 260°C, 270°C, 280°C, or 290°C, or within any range defined between any two of the foregoing values, such as between 225°C and 290°C, 230°C and 280°C, or 235°C and 260°C, for example. In one example, the reactor operates at 230°C.

A vacuum may be applied when the reactions are occurring in the reactor. For example, the vacuum applied

may be less than 29" (inches of mercury (Hg)). In an alternate example, the vacuum applied may be less than 28" or 27" (inches of mercury (Hg)). The reactor may include an agitator to stir the mixture while the reactions occur. The rotational speed of the agitator may be as little as 200 revolutions per minute (rpm), 250 rpm, 300 rpm, as great as 350 rpm, 400 rpm, 450 rpm, or within any range defined between any two of the foregoing values. For example, the rotational speed of the agitator is set at 300 rpm.

2. Termination of the Branched Polyamide Compositions

In polymer chemistry, chain termination is a chemical reaction that ceases the chain propagation step in during polymerization. As mentioned earlier, terminators may be added to the reactor to terminate the amine end and the acid end of the branched polyamide composition in Equations 1 and 3 to form a dual terminated, branched polyamide composition. The dual-terminated polyamide composition may include different terminators for the amine ($-NH_2$) end groups and carboxyl (-COOH) end-groups of the branched polyamide compositions. For example, suitable acid or amine terminators may include molecules with monofunctional carboxyl groups and amine groups, respectively. For example, the terminators may be chemically distinct.

The dual-terminated polyamide composition may be produced by adding terminators to the polymerization process to terminate the amine and carboxyl end groups as shown in Equation 7 below. An acidic terminator is used to terminate the $NH_2$ amine end groups, and an amine terminator is used to terminate the -COOH carboxyl end groups of the polyamide compositions of Equations 1 and 3. Examples of terminators for amine ends of the polymers include acidic terminators such as mono-functional acids (e.g., acetic acid). Examples of carboxyl terminators include amine functional terminators such as mono-functional amines (e.g., cyclohexylamine). The terminators for the acid group and the amine group may be cyclohexyl amine and acetic acid, respectively. Increased levels of terminator additions lowers the end group levels of the amine and carboxyl end groups, which achieves increased polymer melt stability.

For simplicity, an expanded branched polyamide composition product of Equation 3 is used in Equation 7 shown below to illustrate the termination mechanism.

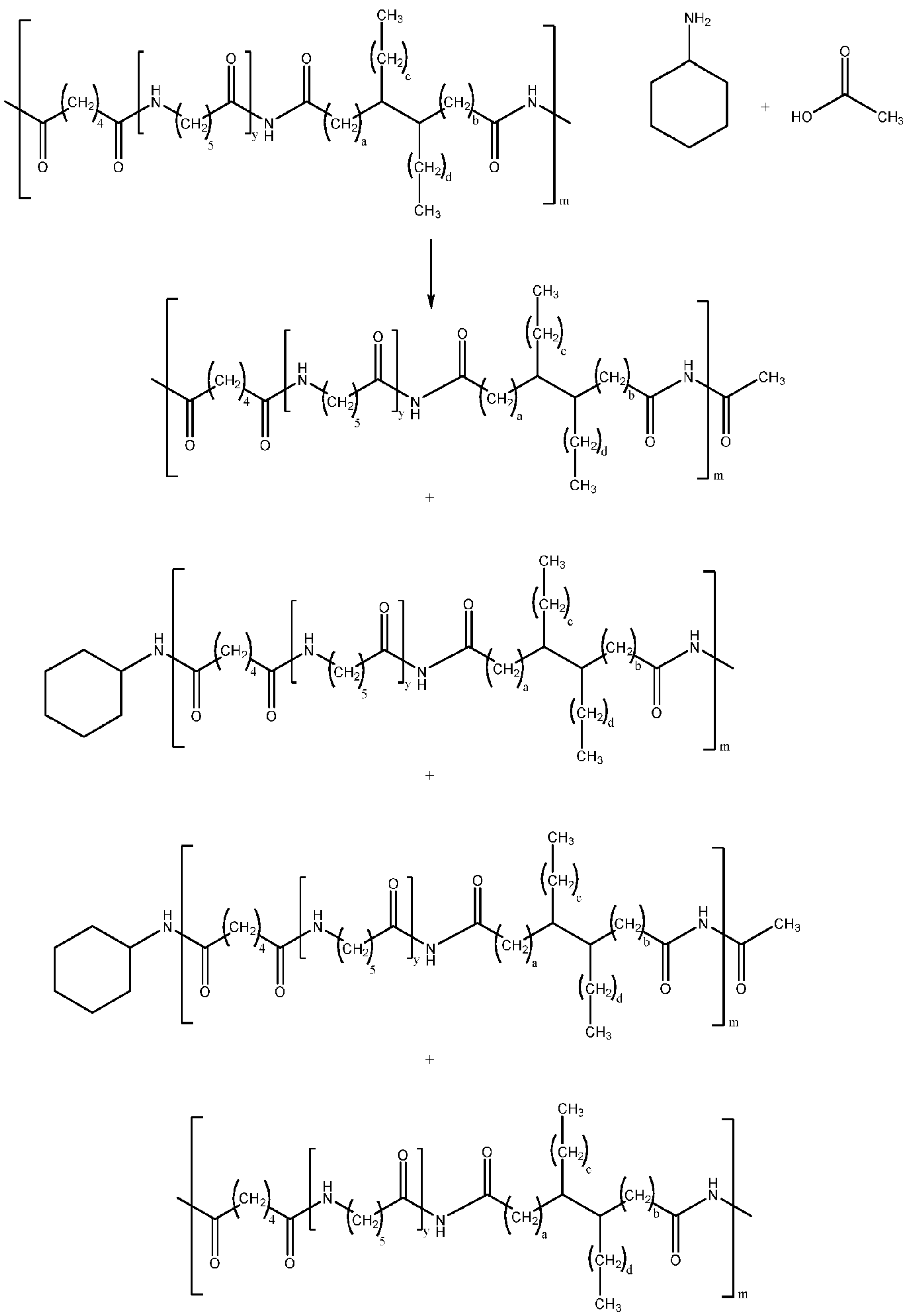

Equation 7

As shown in Equation 7, terminators are added to the reaction to terminate the chain ends of the final polymer shown in Equation 7. Examples of terminators include acetic acid and cyclohexyl amine. The added terminators may terminate the amine end or acid end groups to a different extent ranging from as little as 10%, 20% or 30%, or as great as 40%, 50%, or 80 % of the end groups, or within any range defined between any two of the foregoing values, such as between 25% and 30%, 30% and 40%, and 60% and 80%, based on the initial concentration of end groups in meq/kg.

The added terminators terminate some of the branched polyamide compositions as shown with additional functional groups added to the ends of the polymer chains, while other branched polyamide compositions remain unterminated as shown in Equation 7.

Furthermore, similar termination occurs with the branched polymer products of Equations 4 and 6 as shown in Equation 8 shown below. Examples of terminators include acetic acid and cyclohexyl amine. The added terminators may terminate the amine end or acid end to a different extent ranging from as little as 10%, 20% or 30%, or as great as 40 %, 50%, or 80 % of the end groups, or within any range defined between any two of the foregoing values, such as between 25% and 30%, 30% and 40%, and 60% and 80%, based on the initial concentration of end groups in meq/kg.

The added terminators terminate some of the branched polyamide compositions as shown with additional functional groups added to the ends of the polymer chains, while other branched polyamide compositions remain unterminated as shown in Equation 8.

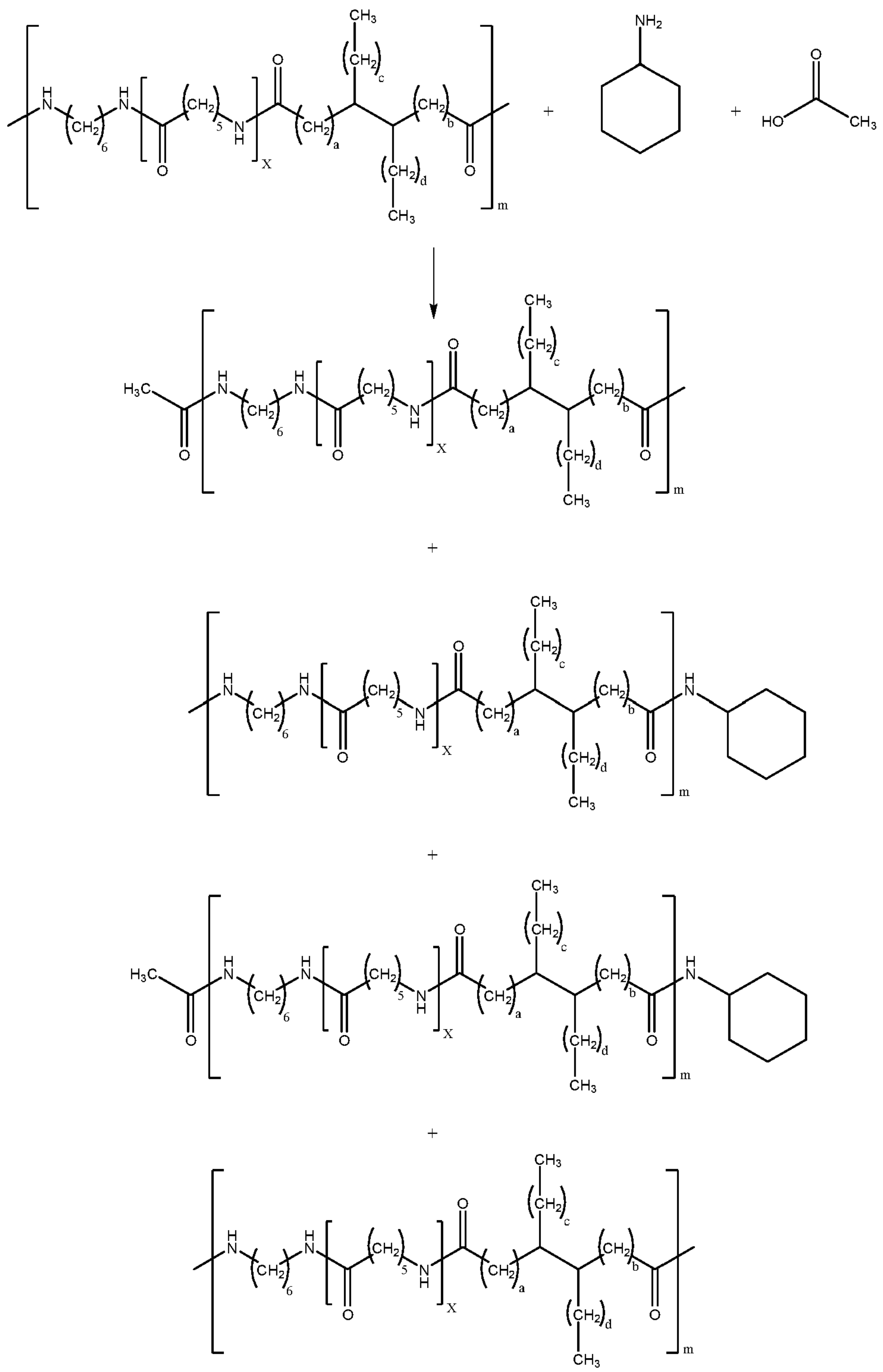

Equation 8

The amine end group concentration can be determined by the amount of p-toluenesulfonic acid (PTSA) needed to titrate a sample of the polyamide in 90% phenol /10% methanol according to the following formula:

$$\frac{\textit{(mL PTSA to titrate sample – mL PTSA to titrate blank)} \times \textit{(Normality of PTSA)} \times 1000}{\frac{1}{2} \times \textit{Sample weight (g)}}$$

The branched, dual-terminated polyamide composition may have a total amine end group concentration as great as 40 meq/kg, 35 meq/kg, 30 meq/kg, as little as 25 meq/kg, 20 meq/kg, 15 meq/kg, or lower, or within any range defined between any two of the foregoing values.

The carboxyl end group concentration can be determined by the amount of potassium hydroxide (KOH) needed to titrate a sample of the polyamide in benzyl alcohol according to the following formula:

$$\frac{\textit{(mL KOH to titrate sample – mL KOH to titrate blank)} \times \textit{(Normality of KOH)} \times 1000}{\textit{Sample weight (g)}}$$

The dual-terminated polyamide composition may have a carboxyl end group concentration as great as 40 meq/kg, 35 meq/kg, 30 meq/kg, as little as 25 meq/kg, 20 meq/kg, 15 meq/kg, or lower, or within any range defined between any two of the foregoing values.

The branched, dual-terminated polyamide composition may have a total active end group concentration (amine endgroup + carboxyl end group) as great as 100 meq/kg, 75 meq/kg, 50 meq/kg, as little as 40 meq/kg, 30 meq/kg, 20 meq/kg, or lower, or within any range defined between any two of the foregoing values, such as 100 meq/kg to 40 meq/kg, 60 meq/kg to 50 meq/kg, 30 meq/kg to 20 meq/kg, or 25 meq/kg to 20 meq/kg. The branched, dual-terminated polyamide composition may have an amine end group concentration of 28 meq/kg and a carboxyl end group concentration of 24 meq/kg. Increasing levels of amine and carboxyl terminators lower the end group levels of amine and carboxyl end groups.

3. Properties of the Dual Terminated, Branched Polyamide Compositions

Polyamide compositions that are branched and dual-terminated exhibit improved thermal and rheological properties as compared to unterminated polyamide compositions that have the same molecular weight. In other words, a polyamide composition that contains short chain branching (≤C8) will exhibit a higher melt viscosity compared to an unbranched analog having a similar molecular weight, i.e., the introduction of branching increases the melt strength of the polyamide composition. Furthermore, the branched, dual terminated polyamide compositions exhibit greater melt stability due to the presence of terminating groups.

The resultant branched, dual-terminated polyamide composition may have a relative viscosity (RV), according to GB/T 12006.1-2009/ISO 307:2007 of as little as 2.0 RV, 2.5 RV, 3 RV , 3.5 RV, 4.0 RV, 4.5 RV, as great as 5.0 RV, 5.5 RV, 6.0 RV, 6.5 RV, 7.0 RV, or within any range defined between any two of the foregoing values, such as 2.4 RV to 7.0 RV, 3.0 RV to 7.0 RV, 4.0 RV to 7.0 RV, 4.5 RV to 7.0 RV, 4.5 RV to 6.5 RV, or 5.0 RV to 6.5 RV.

The resultant branched, dual-terminated polyamide composition may have a relatively high formic acid viscosity (FAV), according to ASTM D-789, as little as 230 FAV, 235 FAV, 240 FAV as high as 900 FAV, 925 FAV, 950 FAV, or within any range defined between any two of the foregoing values, such as 230 FAV to 260 FAV. For example, the resultant branched, dual-terminated polyamide composition has a formic acid viscosity of around 250 FAV.

The branched, dual-terminated polyamide composition may have a melting point as little as 190°C, 195°C, 200°C, 205°C, as great as 210°C, 215°C, 220°C, or within any range defined between any two of the foregoing values, such as 190°C to 220°C; to 195°C to 217°C, 195°C to 215°C, 195°C to 210°C, 190°C to 205°C.

The branched, dual-terminated polyamide composition may have a crystallization temperature ($T_{cc}$) as little as 160°C, 162°C, 165°C, as great as 170°C, 175°C, 180°C, or within any range defined between any two of the foregoing values, such as 166°C to 173°C, as determined by differential scanning calorimetry (DSC), for example.

The resultant branched, dual-terminated polyamide composition may have a relatively high creep recovery. The creep recovery may be as little as 1.0%, 2.5%, 5.0%, as great as 7.0%, 8.5%, 10.0%, or within any range defined between any two of the foregoing values, such as 2.5% to 5.0%. The resultant branched, dual-terminated polyamide composition may have a creep recovery of 4.1%.

The polyamide compositions discussed herein can be used to form fibers and filaments among other materials. Fibers and filaments according to the present disclosure may be formed from polyamide dual terminated, branched

polyamides, including, polyamide-6 (PA-6), polyamide-6,6 (PA-66), polyamide-6/6,6 (PA-666), polyamide-4,6 (PA-46), polyamide-6,10 (PA-610), polyamide-12,12 (PA-1212), and mixtures and copolymers thereof.

As used herein, the phrase "within any range defined between any two of the foregoing values" literally means that any range may be selected from any two of the values listed prior to such phrase regardless of whether the values are in the lower part of the listing or in the higher part of the listing. For example, a pair of values may be selected from two lower values, two higher values, or a lower value and a higher value.

## EXAMPLES

### Example 1 - Complex viscosity of various polyamide materials

Referring to Fig. 1, a graph illustrating the rheological thermal stability of the compounds shown in Table 1 below.

**Table 1: PA-6 compositions tested for thermal stability**

| Composition | Caprolactam: Dimer Acid | Termination type | Branching |
|---|---|---|---|
| Comp. Ex. 1 | 100:0 | None | None |
| Comp. Ex. 2 | 88:12 | None | Yes |
| Comp. Ex. 3 | MBM grade (medium viscosity terminated polyamide-6 composition) | Dual-Terminated | None |
| Ex. 1 | 88:12 | Dual-Terminated | Yes |

The branched, dual terminated compositions of Table 1 were prepared by adding the branched comonomer (dimer acid or dimer diamine), stoichiometric equivalent of corresponding amine or acid, caprolactam and two separate terminator groups to terminate the carboxyl or amine end groups.

Comparative Examples (Comp. Ex.) 1-3 and Example (Ex.) 1 were tested for their rheological properties using a time sweep at 245°C at 0.1 radians/sec, and a strain of 1.25% for 30 minutes. Parallel plate rheometry was conducted on a TA Instruments Discovery HR-2 Hybrid Rheometer, and samples of about a gram was placed in between 25 mm rotors with a gap between the rotors adjusted to 1 mm.

As shown in Fig. 1, Comp. Ex. 3 and Ex. 1 both exhibited a relatively stable viscosity over time (limited increase in complex viscosity over time). By comparison, the curves of Comp. Ex. 1 and Comp. Ex. 2 show approximately a 50% rise in complex viscosity over the same time period. Without wishing to be bound to any particular theory, it is believed that terminated polymers show greater stability in complex viscosity because the presence of chain regulators during the reaction tend to increase the reaction time for molecular weight growth, which contributes to higher viscosity. As such, Comp. Ex. 3 and Ex. 1 show greater melt strength than the other compounds.

### Example 2 - Polymerization of caprolactam with 20% dimer diamine

To prepare the polyamide composition for Example 2 (Ex. 2) as listed in Table 2 below, 154 grams of merchant flake grade caprolactam manufactured by AdvanSix Resins & Chemicals LLC, 36 grams of dimer diamine, and 9.66 grams of adipic acid were charged into a 600 mL Parr reactor equipped with a turbine type impeller. A 5% hypophosphorus acid stock solution (30 ppm) of 0.12 mL was added as a polycondensation catalyst. The reactor was purged with nitrogen, and a vacuum of 28" was applied. The contents were slowly heated to 230°C to initiate the reaction, and the agitation was maintained at 300 rpm.

The mixture was maintained at 230°C, and periodic vacuum was applied to keep the contents under 28" for the duration of polymerization, which was 4.5 hours. At the end of this time interval, the content of the reactor was heated to 260°C, after which reaction mixture was discharged and collected.

After leaching and drying, the solution viscosity in formic acid was determined according to method of ASTM D789.

### Examples 3-9

To prepare the polyamide compositions of Examples 3-9 listed in Table 2 and described below, a series of polymers of caprolactam and dimer amine with different caprolactam:dimer acid ratios were produced using the same apparatus used in Example 2.

Example 3

For the polyamide composition of Example 3, 24 grams of dimer diamine, 6.44 grams of adipic acid, and 170 grams of caprolactam were added to the reactor.

Example 4

Preparation of the polyamide composition of Example 4 included adding 408 grams of adipic acid, 6170 grams of caprolactam, and 0.20 grams of hypophosphorus acid diluted with 2 grams of deionized water to the reactor. The contents were then flushed with 80 grams of deionized water, and the reactor and its contents were pressurized with nitrogen, sealed, and heated to 260°C. The mixture was then agitated once the temperature of the reactor reached 175°C. Once the pressure steadied, the pressure was vented to the atmosphere, and nitrogen was swept over the reactor. After the torque steadied, the reaction was continued for 4 additional hours.

Then, the reactor was emptied into a water bath. The resulting 12 pounds of polymer crumbs were then washed in a pressure cooker at 125°C with 4 gallons of deionized water and filtered. This process was repeated three times, and the resulting polymer was dried in a vacuum oven for three days at 80°C and a vacuum of 29" before being collected. The carboxyl content was verified by the following titration procedure to be 521 meq/kg.

A dimer amine was then added to the polyamide prepolymer formed from the previous steps. Specifically, 12 grams of dimer amine with an amine value of 206 meq/kg was then added to 88 grams of the polyamide prepolymer and charged into a 600 mL reactor equipped with a turbine type impeller. 0.12 mL of a 5% hypophosphorus acid stock solution (30 ppm) was added to the reactor as a polycondensation catalyst, and the reactor was purged with nitrogen and a vacuum of -28". The contents of the reactor were then slowly heated to 230°C to initiate the reaction. The contents were also mixed at 300 rpm and maintained at 230°C. Periodic vacuum was applied to keep the contents under a vacuum of 28", and the polymerization was allowed to continue for a total of 4.5 hours. At the end of this time interval, the contents of the reactor were heated to 260°C, after which the reaction mixture was discharged and collected.

Example 5

The polyamide composition of Example 5 was prepared similarly to Example 2, except that 24 grams of a dimer acid and 5.11 grams of hexamethylene diamine were combined with 171 grams of caprolactam.

Example 6

For the polyamide composition of Example 6, the reactor charge was the same as Example 3; however, 3 grams of cyclohexyl amine and 8.5 grams of acetic acid were added to partially react with the acid and amine ends, respectively.

Example 7

The polyamide composition of Example 7 was prepared with 200 grams of caprolactam, 12 mg of hypophosphorus acid, and 3 grams of hydrolysis water. In this Example, the contents of the reactor was pressurized with nitrogen, and heated to 230°C. The reaction was maintained at these conditions for 4 hours. After 4 hours, the pressure was released from the reactor, and the reactor was heated to 260°C. The contents of the reactor then remained in the reactor for 1 hour before the end product was collected for testing.

Example 8

The polyamide composition of Example 8 was prepared similarly to Example 3, except that 12 grams of dimer diamine 1075 and 3.12 grams of adipic acid were combined with 185 grams of caprolactam. 0.1 grams of isophthalic acid was also included in the mixture.

Example 9

The polyamide composition of Example 9 was prepared by adding 3.6 grams of dimer diamine and 0.97 grams of adipic acid in addition to 195.4 grams of caprolactam.

All samples described above (Examples 3-9) were leached, after their respective preparations, at 100°C for 3 hours and vacuum oven dried at 90°C for 48 hours before testing - the results of such testing are shown in Table 2 below.

**Table 2**: Characterization results of the above described the inventive and comparative examples

| Ex. # | Composition (CPL:Dimer diamine) or (CPL: Dimer acid) | $T_m$, $T_{cc}$ (°C) | Observed FAV/RV | End Group Analysis | | Calculated molecular weight/ Calculated FAV* | Isothermal crystallization time, $t_{1/2}$ (s) |
|---|---|---|---|---|---|---|---|
| | | | | [COOH] meq/kg | [$NH_2$] meq/kg | | |
| Ex. 2 | 80:20 | 201,160 | 970/6.2 | | 56 | | 78 |
| Ex. 3 | 88:12 (unterminated) | 213,173 | 674/5.7 | 51 | 54 | 19K/59 | 63 |
| Ex. 4 | 88:12 (with polyamide prepolymer) | 212,173 | 946/6.1 | | 52 | | 18 |
| Ex. 5 | 88:12 (prepared with dimer acid, hexamethylene diamine, and caprolactam) | 208,171 | 847/6.0 | | 57 | | 68 |
| Ex. 6 | 88:12 (dual terminated) | 211,174 | 249/4.5 | | 28 | | 60 |
| Ex. 7 (Comp. Ex. 4) | 100:0 (Polyamide-6 control with Ex. 4's process) | 221,190 | 55/2.2 | 52 | 55 | 18.6K/57 | 18 |
| Ex. 8 | 94:6 | 214,180 | - | | | | 35 |
| Ex. 9 | 98:2 | 219,187 | - | | | | 29 |
| Comp. Ex. 3 | MBM (medium viscosity terminated Polyamide-6 composition) | - | - | | 27 | | 20 |

Thermal analysis was performed on a 6 mg sample of each Example's composition by using a TA Q series Differential Scanning Calorimeter (DSC) at a heating rate of 10 °C/min to 265 °C, followed by rapid cooling to 170 °C and holding for 30 minutes. The melt temperature ($T_m$), crystallization temperature ($T_{cc}$), and isothermal crystallization temperature ($t_{1/2}$) for each sample are provided in Table 2.

The melting point of each copolymer was determined using Differential Scanning Calorimetry according to ASTM D3418. The results of which are provided in Table 2 above. As shown in Table 2, Ex. 6 exhibited a lower melting point temperature than Ex. 7 or Comp. Ex. 4 while exhibiting a similar melting point temperature for Ex. 3-5. Furthermore, the melting point of each copolymer decreases as a greater amount of dimer amine is added.

The samples were also titrated to determine their acid content via a custom method. Each sample was prepared in triplicate by dissolving 0.4 g of material into 70 mL of benzyl alcohol and heated to approximately 200°C with stirring. The samples were then titrated via a potentiometric autotitrator (e.g., Metrohm 855 Robotic Titrosampler, equipped with Tiamo 2.4 software) standardized 0.014 M tetrabutylammonium hydroxide in methanol. A blank sample was also run, and the samples were corrected for the acid content of the blank sample. Results for Comp. Ex. 4 were determined to be 52 meq/kg.

Parallel plate viscosity data of samples were also recorded as shown in Table 3 below. The viscosity data include metrics such as formic acid viscosity (FAV), storage modulus (G'), and creep recovery (%). The testing conditions were as follows: a constant shear of 50 Pascals (Pa) was applied for 100 seconds and monitored to measure creep recovery. The temperature at which testing was performed was at 245°C. Both Comp. Ex. 4 and Ex. 6 (shown in Table 3) have similar chain lengths calculated based on amine and carboxyl end groups.

**Table 3**

| Sample | FAV | G', Storage Modulus, x 1,000 (Pa) | Creep Recovery (%) |
|---|---|---|---|
| Comp. Ex. 4 | 40 | 206 | 0.7 |
| Ex. 6 | 249 | 242 | 4.1 |

As shown in Table 3, Ex. 6 exhibited higher creep recovery and storage modulus (G') as compared to comparative example. A higher creep recovery and storage modulus generally indicate a greater melt strength and better extensibility. Additionally, an overall higher creep recovery generally indicates a greater melt elasticity. As such, the branched, dual terminated polyamide composition of Ex. 6 exhibited a greater melt strength and extensibility than its unbranched analog.

Example 10- Complex viscosity of various polyamide materials

Referring now to Fig. 2, a graph illustrating the complex viscosity versus frequency curves of the compounds shown in Table 4 below.

**Table 4**

| Composition | Caprolactam: Dimer Acid | Termination type | Branching |
|---|---|---|---|
| Comp. Ex. 5 | 100:0 | None | None |
| Comp. Ex. 6 | 98:2 | None | Yes |
| Comp. Ex. 7 | MBM grade (medium viscosity terminated Nylon 6 composition) | Dual-Terminated | None |
| Ex. 1 | 88:12 | Dual-Terminated | Yes |

The compositions of Table 4 were prepared by adding the branched comonomer (dimer acid or dimer amine), stoichiometric equivalent of amine or acid, caprolactam and two terminator groups to terminate the carboxyl or amine ends.

Comparative Examples (Comp. Ex.) 5-7 and Example (Ex.) 1 were tested using a time sweep at 245°C at 0.1 radians/second, and a strain of 1.25% for 30 minutes. Parallel plate rheometry was conducted on a TA Instruments Discovery HR-2 Hybrid Rheometer, and samples of 4-5 grams were placed in between 25 mm rotors with a gap between the rotors adjusted to 1 mm.

The complex viscosities of Comp. Ex. 5-7 and Ex. 1 were then compared as shown in Fig. 2, which shows the frequency versus complex viscosity of a dual terminated branched polyamide (Ex. 1) with a polyamide 6 control (Comp. Ex. 5, manufactured by AdvanSix Resins & Chemicals LLC), an unterminated polyamide (2% dimer acid) (Comp. Ex. 6), and a dual-terminated polyamide 6 (Comp. Ex. 7, MBM Grade, manufactured by AdvanSix Resins & Chemicals LLC). Fig. 2 shows that the viscosity of branched analogs as compared to their unbranched analogs are frequency dependent. At low frequencies, Ex. 1 displays a higher complex viscosity. However, as frequency increases, the complex viscosity of Ex. 1 crosses over at ~20 radians/second and at higher frequencies, Ex. 1 displays less complex viscosity.

Moreover, the length and distribution of the branches can influence their capacity to entangle. If the branches of the polyamide composition are long enough and distributed well, the complex viscosity will be higher at lower frequencies than that of a corresponding unbranched analogs of similar molecular weight.

## Claims

1. A method of producing a branched, terminated polyamide composition, the method comprising:

   reacting caprolactam and adipic acid or hexamethylene diamine in a reactor vessel to form a polyamide prepolymer;
   reacting the polyamide prepolymer to a dimer amine or a dimer acid to form a branched, polyamide composition; and
   adding terminators to the reactor vessel such that the branched, terminated polyamide composition is formed.

2. The method of claim 1, wherein the branched, terminated polyamide composition has an amine endgroup concentration of 15 mmol/kg to 40 mmol/kg, and has a carboxyl endgroup concentration of 15 mmol/kg to 40 mmol/kg.

3. The method of claims 1 or 2, wherein the branched, terminated polyamide composition has a relative viscosity of 2.4 RV to 7.0 RV as determined by GB/T 12006.1-2009/ISO 307:2007.

4. The method of any of claims 1-3, wherein the branched, terminated polyamide composition has a relative viscosity of 4.0 RV to 7.0 RV as determined by GB/T 12006.1-2009/ISO 307:2007.

5. The method of any of claims 1-4, wherein the branched, terminated polyamide composition has a formic acid viscosity of 230 FAV to 260 FAV, as determined by ASTM D789.

6. The method of any of claims 1-5, wherein the branched, terminated polyamide composition has a relative viscosity of 4.0 RV to 7.0 RV and a formic acid viscosity of 230 FAV to 260 FAV, as determined by ASTM D789.

7. The method of any of claims 1-6, wherein the ratio of caprolactam to dimer acid in the branched, terminated polyamide composition is 88:12.

8. The method of any of claims 1-7, wherein the polyamide composition may be selected from the group consisting of polyamide-6, polyamide 6,6, polyamide 6/6,6, polyamide 4,6, polyamide 6,10, polyamide 12,12 and mixtures and copolymers thereof.

**Patentansprüche**

1. Verfahren zur Herstellung einer verzweigten, terminierten Polyamidzusammensetzung, wobei das Verfahren Folgendes umfasst:

   Umsetzen von Caprolactam und Adipinsäure oder Hexamethylendiamin in einem Reaktionsgefäß zur Bildung eines Polyamid-Prepolymers;
   Umsetzen des Polyamid-Prepolymers zu einem Dimeramin oder einer Dimersäure zur Bildung einer verzweigten, Polyamidzusammensetzung und
   Zugeben von Abbruchmitteln zum Reaktionsgefäß derart, dass die verzweigte, terminierten Polyamidzusammensetzung gebildet wird.

2. Verfahren nach Anspruch 1, wobei die verzweigte, terminierte Polyamidzusammensetzung eine Amin-Endgruppen-Konzentration von 15 mmol/kg bis 40 mmol/kg aufweist und eine Carboxyl-Endgruppen-Konzentration von 15 mmol/kg bis 40 mmol/kg aufweist.

3. Verfahren nach Anspruch 1 oder 2, wobei die verzweigte, terminierte Polyamidzusammensetzung eine relative Viskosität von 2,4 RV bis 7,0 RV gemäß Bestimmung nach GB/T 12006.1-2009/ISO 307:2007 aufweist.

4. Verfahren nach einem der Ansprüche 1-3, wobei die verzweigte, terminierte Polyamidzusammensetzung eine relative Viskosität von 4,0 RV bis 7,0 RV gemäß Bestimmung nach GB/T 12006.1-2009/ISO 307:2007 aufweist.

5. Verfahren nach einem der Ansprüche 1-4, wobei die verzweigte, terminierte Polyamidzusammensetzung eine Ameisensäureviskosität von 230 FAV bis 260 FAV gemäß Bestimmung nach ASTM D789 aufweist.

6. Verfahren nach einem der Ansprüche 1-5, wobei die verzweigte, terminierte Polyamidzusammensetzung eine relative Viskosität von 4,0 RV bis 7,0 RV und eine Ameisensäureviskosität von 230 FAV bis 260 FAV gemäß Bestimmung nach ASTM D789 aufweist.

7. Verfahren nach einem der Ansprüche 1-6, wobei das Verhältnis von Caprolactam zu Dimersäure in der verzweigten, terminierten Polyamidzusammensetzung 88:12 beträgt.

8. Verfahren nach einem der Ansprüche 1-7, wobei die Polyamidzusammensetzung aus der Gruppe bestehend aus Polyamid 6, Polyamid 6,6, Polyamid 6/6,6, Polyamid 4,6, Polyamid 6,10, Polyamid 12,12 und Mischungen und Copolymeren davon ausgewählt sein kann.

## Revendications

1. Procédé de production d'une composition de polyamide terminé, ramifié, le procédé comprenant :

   la mise en réaction de caprolactame et d'acide adipique ou d'hexaméthylène diamine dans une cuve de réacteur pour former un prépolymère de polyamide ;
   la mise en réaction du prépolymère de polyamide sur une amine dimère ou un acide dimère pour former une composition de polyamide, ramifié ; et
   l'ajout d'agents de terminaison à la cuve de réacteur de sorte que la composition de polyamide terminé, ramifié soit formée.

2. Procédé selon la revendication 1, la composition de polyamide terminé, ramifié possédant une concentration de groupes terminaux de type amine de 15 mmole/kg à 40 mmole/kg, et possédant une concentration de groupes terminaux de type carboxyle de 15 mmole/kg à 40 mmole/kg.

3. Procédé selon la revendication 1 ou 2, la composition de polyamide terminé, ramifié possédant une viscosité relative de 2,4 RV à 7,0 RV telle que déterminée selon la norme GB/T 12006.1-2009/ISO 307:2007.

4. Procédé selon l'une quelconque des revendications 1 à 3, la composition de polyamide terminé, ramifié possédant une viscosité relative de 4,0 RV à 7,0 RV telle que déterminée selon la norme GB/T 12006.1-2009/ISO 307:2007.

5. Procédé selon l'une quelconque des revendications 1 à 4, la composition de polyamide terminé, ramifié possédant une viscosité dans l'acide formique de 230 FAV à 260 FAV, telle que déterminée selon la norme ASTM D789.

6. Procédé selon l'une quelconque des revendications 1 à 5, la composition de polyamide terminé, ramifié possédant une viscosité relative de 4,0 RV à 7,0 RV et une viscosité dans l'acide formique de 230 FAV à 260 FAV, telle que déterminée selon la norme ASTM D789.

7. Procédé selon l'une quelconque des revendications 1 à 6, le rapport de caprolactame sur acide dimère dans la composition de polyamide terminé, ramifié étant de 88 : 12.

8. Procédé selon l'une quelconque des revendications 1 à 7, la composition de polyamide pouvant être choisie dans le groupe constitué par un polyamide-6, un polyamide 6,6, un polyamide 6/6,6, un polyamide 4,6, un polyamide 6,10, un polyamide 12,12 et des mélanges et des copolymères correspondants.

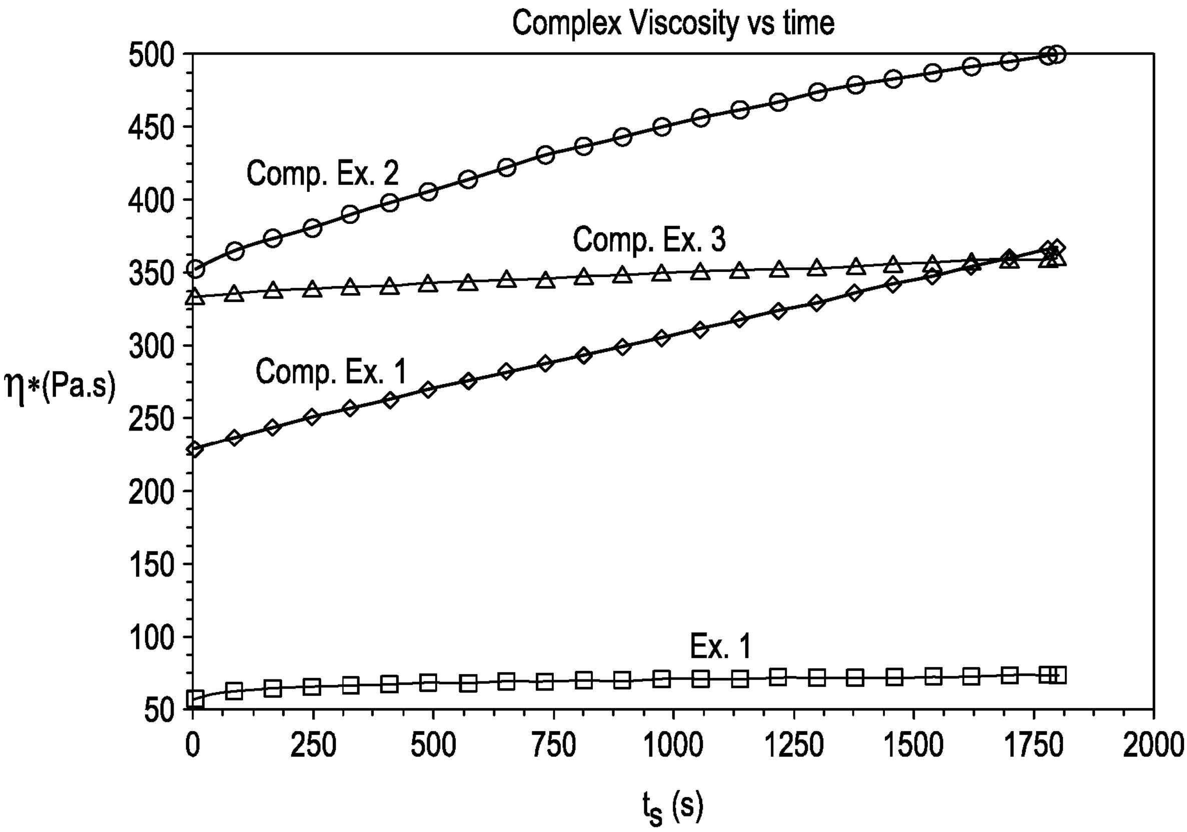
Complex Viscosity vs time
η*(Pa.s)
500
450
400
350
300
250
200
150
100
50
0
250
500
750
1000
1250
1500
1750
2000
$t_S$ (s)
Comp. Ex. 2
Comp. Ex. 3
Comp. Ex. 1
Ex. 1

*FIG. 1*

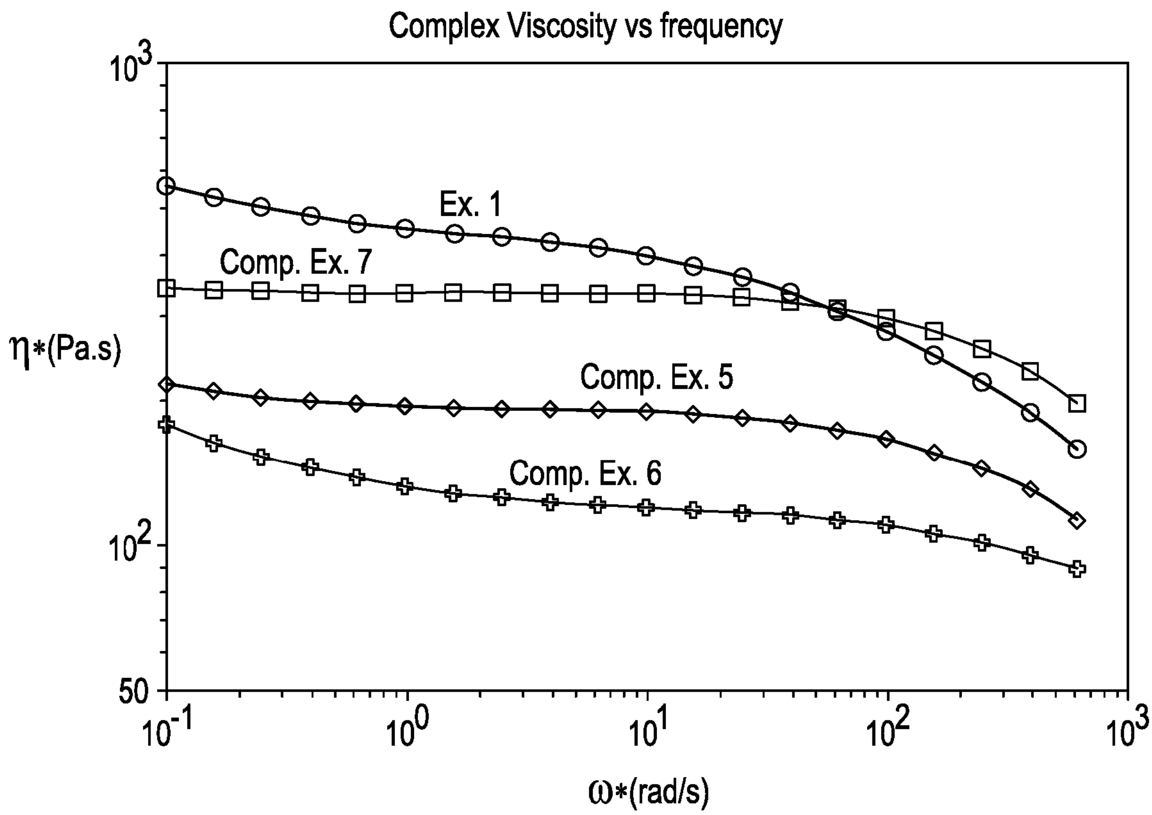
Complex Viscosity vs frequency
10^3
10^2
50
η*(Pa.s)
Ex. 1
Comp. Ex. 7
Comp. Ex. 5
Comp. Ex. 6
10^-1
10^0
10^1
10^2
10^3
ω*(rad/s)

*FIG. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **KIRK-OTHMER.** *Encyclopedia of Chemical Technology,* vol. 2, 1-13
- **KIRK-OTHMER.** *Encyclopedia of Chemical Technology,* vol. 2, 518-537